# FASCICULE DE BREVET EUROPEEN

(11) **EP 3 292 619 B1**
(45) Date de publication et mention de la délivrance du brevet: **12.06.2019**
(21) Numéro de dépôt: 16719314.3
(22) Date de dépôt: 15.04.2016
(51) Int. Cl.: H02K 5/173, F16D 1/10

(54) **ENSEMBLE ELECTROMECANIQUE COMPORTANT UNE MACHINE ELECTRIQUE COUPLEE A UN REDUCTEUR**
ELEKTROMECHANISCHE BAUGRUPPE MIT EINER AN EIN UNTERSETZUNGSGETRIEBE GEKOPPELTEN ELEKTRISCHEN MASCHINE
ELECTROMECHANICAL ASSEMBLY COMPRISING AN ELECTRICAL MACHINE COUPLED TO A REDUCTION GEAR

(30) Priorité: 05.05.2015 FR 1554039
(43) Date de publication de la demande: 14.03.2018
(73) Titulaire: Moteurs Leroy-Somer, 16915 Angouleme Cedex 9 (FR)
(72) Inventeur: CALMETTES, Didier, 16400 Puymoyen (FR); KOECHLIN, Samuel, 16000 Angouleme (FR)
(74) Mandataire: Nony
(86) Numéro de dépôt international: PCT/EP2016/058357
(87) Numéro de publication internationale: WO 2016/177550

(56) Documents cités:
- DE-U1- 20 215 010
- US-A- 2 317 070
- US-A1- 2007 273 229

## Description

La présente invention concerne les ensembles électromécaniques comportant une machine électrique et un réducteur, et plus particulièrement mais non exclusivement ceux dans lesquels la machine électrique est un moteur, notamment un moteur de traction automobile.

Il est connu d'assembler un moteur électrique et un réducteur au moyen d'une liaison cannelée, l'un des arbres étant un arbre mâle et l'autre un arbre femelle, lequel est typiquement un arbre ayant une partie d'extrémité creuse dans laquelle est frettée une douille. Afin de permettre l'assemblage des arbres, un jeu doit exister au niveau des cannelures, qui est source d'usure et de bruit. Le moteur peut ne comporter qu'un seul roulement à l'arrière, l'arbre du moteur étant guidé à l'avant par l'arbre du réducteur, lequel peut être supporté par deux roulements.

Typiquement, les cannelures de l'arbre mâle sont taillées directement dans celui-ci, tandis que celles de l'arbre femelle sont usinées dans la douille.

Il est connu d'ajouter une portée de centrage entre l'arbre mâle et l'arbre femelle en avant des cannelures, pour réduire la tendance des cannelures à se désaligner en fonctionnement sous l'effet de la force radiale liée aux forces magnétiques de la machine électrique et à générer une usure par corrosion de contact.

Le jeu classiquement présent pour le montage des arbres au niveau de la portée de centrage est de l'ordre de 5 à 35 microns, ce qui permet un déplacement angulaire de désalignement de l'ordre de 0,06° à 0,4°. Ce déplacement entraîne une usure des cannelures qui constitue une source de bruit et d'usure impactant négativement la durée de vie de l'ensemble.

Afin d'amortir le déplacement entre les arbres mâle et femelle il est connu par les publications US 3 686 895 et CN 102644636 d'interposer radialement des éléments amortisseurs tels que des joints toriques au niveau des cannelures, ou au niveau de la portée cylindrique.

DE 202 15 010 U1 divulgue un ensemble électromécanique comportant une machine électrique couplée à un vilebrequin de moteur à combustion interne, l'un de la machine électrique comportant un arbre mâle et l'autre un arbre femelle dans lequel l'arbre mâle est engagé, la transmission du couple entre les deux étant assurée par coopération de formes, l'arbre de la machine électrique étant supporté à l'arrière par un roulement.

Il existe un besoin pour perfectionner encore les ensembles électromécaniques comportant un moteur et un réducteur accouplé au moteur afin notamment de réduire le bruit et l'usure en fonctionnement.

L'invention vise à répondre à ce besoin et a pour objet un ensemble électromécanique comportant une machine électrique accouplée à un réducteur, la machine électrique comportant un seul roulement à l'arrière, l'un de la machine électrique et du réducteur comportant un arbre mâle et l'autre un arbre femelle engagé sur l'arbre mâle, les arbres présentant des portées coniques et l'ensemble comportant un élément élastiquement déformable sollicitant lesdites portées en déplacement axial relatif, du fait de l'appui des portes coniques entre elles, jusqu'à ce qu'elle viennent en engagement.

L'invention permet, en chargeant axialement le roulement arrière du moteur, c'est-à-dire en mettant celui-ci en précontrainte axiale, de limiter son usure et le bruit généré.

De plus, l'invention garantit un bon centrage de l'arbre mâle au sein de l'arbre femelle, ce qui limite l'usure des reliefs coopérants des deux arbres.

Enfin, le contact entre les portées coniques peut améliorer la retenue de la graisse éventuellement présente à l'interface entre les arbres.

De préférence, la transmission du couple est assurée par des cannelures coopérantes formées sur les arbres mâle et femelle.

L'arbre femelle est de préférence celui de la machine électrique, mais en variante il s'agit de celui du réducteur.

La machine électrique est de préférence un moteur, avec de préférence une vitesse de rotation comprise entre 10 000 et 18 000 rpm. Ce moteur peut être un moteur de traction automobile.

De préférence, l'ensemble comporte un ou plusieurs joints toriques s'interposant radialement entre les arbres mâle et femelle. En présence de graisse, le ou les joints toriques présentent l'avantage d'assurer une retenue de celle-ci, permettant de garantir dans la durée la lubrification des reliefs de transmission du couple entre l'arbre mâle et l'arbre femelle.

De préférence, le réducteur comporte un joint d'étanchéité s'appliquant sur l'arbre en avant de celui de la machine électrique.

L'arbre femelle peut comporter une douille frettée dans un logement de l'arbre femelle.

Le demi-angle du cône de la portée conique de l'arbre femelle peut être compris entre 5° et 45°.

De préférence, le roulement arrière est un roulement à billes.

L'invention pourra être mieux comprise à la lecture de la description détaillée qui va suivre, d'un exemple non limitatif de mise en oeuvre de celle-ci, et à l'examen du dessin annexé, sur lequel :
- La figure 1 représente de façon schématique et partielle en coupe axiale un exemple d'ensemble électromécanique selon l'invention, et
- les figures 2 à 4 représentent des détails de la figure 1.

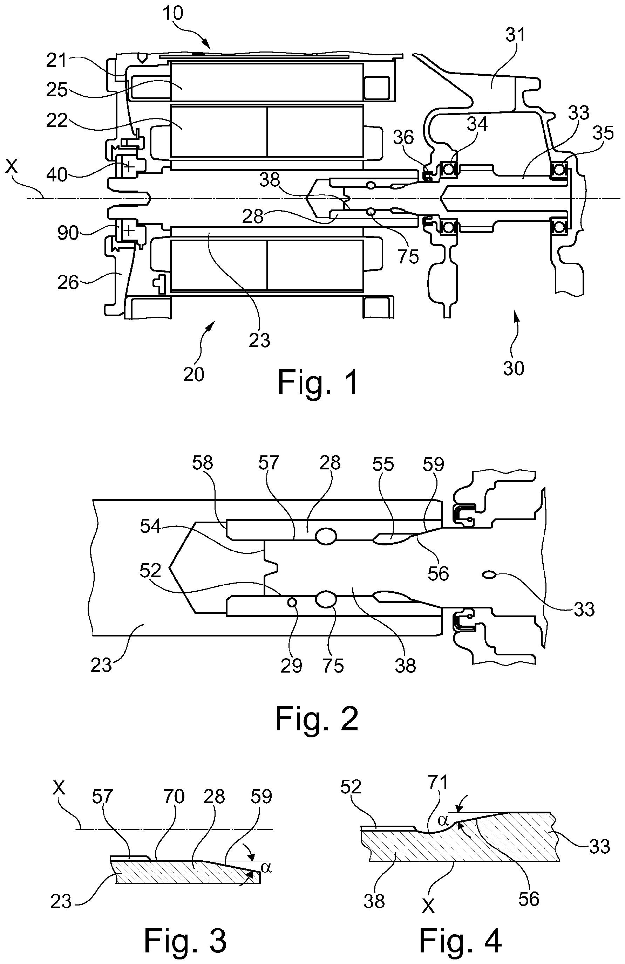

L'ensemble 10 représenté à la figure 1 comporte une machine électrique 20 et un réducteur 30 accouplé à la machine 20.

La machine 20 et le réducteur 30 comportent des carters respectifs 21 et 31 qui sont assemblés ensemble, par exemple par boulonnage.

La machine 20 est dans l'exemple considéré un moteur électrique, et comporte un rotor 22 dont l'arbre 23 tourne en rotation autour d'un axe X.

Le rotor 22 est interne à un stator 25.

La machine 20 peut être un moteur à aimants permanents.

L'arbre 23 est supporté à l'arrière par un roulement 40, porté par un flasque 26 de la machine 20.

Le réducteur 30 comporte un arbre d'entrée 33 qui est guidé à l'avant et à l'arrière par des roulements respectifs 34 et 35.

Les roulements 40, 34 et 35 sont de préférence des roulements à billes.

Un joint à lèvre 36 peut être prévu, comme illustré, pour s'appliquer sur l'arbre 33 en avant du roulement 34. Ce joint peut retenir la graisse du réducteur.

Une liaison mécanique, représentée plus particulièrement à la figure 2, assure la transmission du couple entre les arbres 23 et 33. Cette liaison est dans l'exemple considéré une liaison cannelée, l'arbre 33 comportant une partie mâle cannelée 38 engagée dans une douille 28 frettée dans une partie femelle 29 de l'arbre 23.

Les cannelures 52 de la partie d'arbre 38 s'étendent axialement entre le bout d'arbre 54 et une gorge 55 ménagée en avant d'une portée conique 56.

Les cannelures 57 de la douille 28 s'étendent entre l'extrémité arrière 58 de la douille et une portée conique 59.

La douille 28 peut comporter, comme illustré à la figure 3, en avant des cannelures 57, une portion 70 de surface intérieure cylindrique de révolution d'axe X, et en avant de cette portion, la portée conique 59 précitée, de demi-angle au sommet a.

L'arbre mâle comporte, en arrière des cannelures 52, comme illustré à la figure 4, une gorge annulaire 71, et en arrière de celle-ci, la portée conique 56 précitée, de demi-angle α au sommet, de même valeur que l'angle α de la portée conique 59 de la douille.

Les portées coniques 59 et 56 de l'arbre femelle et de l'arbre mâle viennent en contact, sous l'effet de rappel d'un élément élastique 90.

Dans l'exemple considéré, cet élément élastique 90 s'interpose axialement entre le roulement arrière 40 et le carter de la machine électrique 20, et il a été schématiquement représenté à la figure 1.

Il s'agit par exemple d'une rondelle élastique en acier à ressort, ou d'un ressort plat.

Cet élément élastique 90 présente une déformabilité suffisante pour compenser les tolérances d'assemblage entre les arbres 23 et 33, de façon à garantir un contact entre les portées coniques 56 et 59 et à mettre en contrainte axiale le roulement arrière 40.

Le contact entre les portées coniques 56 et 59 présente un double avantage ; d'une part il permet de réduire l'usure et le bruit du roulement arrière 40 en chargeant celui-ci ; d'autre part il réduit l'usure et le bruit au niveau des cannelures en améliorant le centrage et en formant un joint tendant à s'opposer au départ de la graisse présente au niveau des cannelures.

La liaison peut comporter, comme illustré, un joint torique 75 s'interposant entre les arbres, au niveau des cannelures. Ce joint torique est reçu dans des gorges annulaires en regard, ménagées sur les arbres.

L'expression « comportant un » doit être comprise comme étant synonyme de « comprenant au moins un ».

## Revendications

1. Ensemble électromécanique comportant une machine électrique (20) accouplée à un réducteur (30), la machine électrique comportant un seul roulement (40) à l'arrière, l'un de la machine électrique et du réducteur comportant un arbre mâle (33) et l'autre un arbre femelle (23) engagé sur l'arbre mâle, les arbres présentant des portées coniques (56,59) et l'ensemble comportant un élément élastiquement déformable (90) sollicitant lesdites portées en déplacement axial relatif jusqu'à ce qu'elles viennent en engagement.

2. Ensemble selon la revendication précédente, la transmission du couple étant assurée par des cannelures coopérantes (52,57) formées sur les arbres mâle et femelle.

3. Ensemble selon l'une des revendications précédentes, l'arbre femelle étant celui de la machine électrique (20).

4. Ensemble selon la revendication 3, la machine électrique étant un moteur, avec de préférence une vitesse de rotation comprise entre 10 000 et 18 000 rpm.

5. Ensemble selon la revendication précédente, le moteur étant un moteur de traction automobile.

6. Ensemble selon l'une quelconque des revendications précédentes, comportant un ou plusieurs joints toriques (75) s'interposant radialement entre les arbres mâle et femelle.

7. Ensemble selon l'une quelconque des revendications précédentes, l'arbre femelle (23) comportant une douille (28) frettée dans un logement de l'arbre femelle.

8. Ensemble selon l'une quelconque des revendications précédentes, le demi-angle (a) du cône de la portée conique de l'arbre femelle étant compris entre 5° et 45°.

9. Ensemble selon l'une quelconque des revendications précédentes, le roulement arrière (40) étant un roulement à billes.

## Patentansprüche

1. Elektromechanische Baugruppe, welche eine elektrische Maschine (20) umfasst, die mit einem Untersetzungsgetriebe (30) gekoppelt ist, wobei die elektrische Maschine ein einziges Wälzlager (40) hinten umfasst, wobei eines von der elektrischen Maschine und dem Untersetzungsgetriebe eine Innenwelle (33) und das andere eine Außenwelle (23), die auf die Innenwelle aufgesteckt ist, umfasst, wobei die Wellen konische Wellensitze (56, 59) aufweisen und die Baugruppe ein elastisch verformbares Element (90) umfasst, das die Wellensitze auf relative axiale Verschiebung beansprucht, bis sie in Eingriff gelangen.

2. Baugruppe nach dem vorhergehenden Anspruch, wobei die Übertragung des Drehmoments durch zusammenwirkende Rillen (52, 57) sichergestellt wird, die an der Innen- und der Außenwelle ausgebildet sind.

3. Baugruppe nach einem der vorhergehenden Ansprüche, wobei die Außenwelle diejenige der elektrischen Maschine (20) ist.

4. Baugruppe nach Anspruch 3, wobei die elektrische Maschine ein Motor ist, vorzugsweise mit einer Drehzahl zwischen 10 000 U/min und 18 000 U/min.

5. Baugruppe nach dem vorhergehenden Anspruch, wobei der Motor ein Fahrmotor eines Automobils ist.

6. Baugruppe nach einem der vorhergehenden Ansprüche, welche einen oder mehrere O-Ringe (75) umfasst, die radial zwischen der Innen- und der Außenwelle angeordnet sind.

7. Baugruppe nach einem der vorhergehenden Ansprüche, wobei die Außenwelle (23) eine Hülse (28) umfasst, die mit Schrumpfsitz in eine Aufnahme der Außenwelle eingepasst ist.

8. Baugruppe nach einem der vorhergehenden Ansprüche, wobei der Halbwinkel (α) des Kegels des konischen Wellensitzes der Außenwelle zwischen 5° und 45° beträgt.

9. Baugruppe nach einem der vorhergehenden Ansprüche, wobei das hintere Wälzlager (40) ein Kugellager ist.

## Claims

1. An electromechanical assembly comprising an electrical machine (20) coupled to a reduction gear (30), the electrical machine comprising a single bearing (40) at the rear, either the electrical machine or the reduction gear comprising a male shaft (33) and the other one comprising a female shaft (23) engaged on the male shaft, the shafts having conical bearing surfaces (56, 59) and the assembly comprising an elastically deformable element (90) biasing said shifting bearing surfaces axially relative to one another until they engage with one another.

2. The assembly as claimed in the preceding claim, the transmission of the torque being ensured by interacting splines (52, 57) formed on the male and female shafts.

3. The assembly as claimed in one of the preceding claims, the female shaft being the shaft of the electrical machine (20).

4. The assembly as claimed in claim 3, the electrical machine being a motor with, preferably, a speed of rotation of between 10 000 and 18 000 rpm.

5. The assembly as claimed in the preceding claim, the motor being an automobile traction motor.

6. The assembly as claimed in any one of the preceding claims, comprising one or more O-rings (75) interposed radially between the male and female shafts.

7. The assembly as claimed in any one of the preceding claims, the female shaft (23) comprising a shrouded bush (28) in a housing of the female shaft.

8. The assembly as claimed in any one of the preceding claims, the half-angle (a) of the cone of the conical bearing surface of the female shaft being between 5° and 45°.

9. The assembly as claimed in any one of the preceding claims, the rear bearing (40) being a ball bearing.
